# EUROPEAN PATENT APPLICATION

(11) **EP 4 109 353 A2**
(43) Date of publication of application: **28.12.2022**
(21) Application number: 22205528.7
(22) Date of filing: 04.11.2022
(51) Int. Cl.: G06N 3/08, G06N 3/04, G06N 3/063

(54) **METHOD AND APPARATUS OF GENERATING PRE-TRAINING MODEL, ELECTRONIC DEVICE, AND STORAGE MEDIUM**

(30) Priority: 05.11.2021 CN 202111310390
(71) Applicant: Beijing Baidu Netcom Science Technology Co., Ltd., Beijing 100085 (CN)
(72) Inventor: Xi, Teng, Beijing, 100085 (CN); Zhang, Gang, Beijing, 100085 (CN)
(74) Representative: Hoffmann Eitle

(57) **Abstract**

The present disclosure provides a method and an apparatus of generating a pre-training model, an electronic device and a storage medium, which relates to a field of an artificial intelligence technology, in particular to a computer vision and deep learning technology. The specific implementation solution includes: determining a performance index set corresponding to a candidate model structure set, the candidate model structure set is determined from a plurality of model structures included in a search space, and the search space is a super-network-based search space; determining, from the candidate model structure set, a target model structure corresponding to each of a plurality of chips according to the performance index set, each target model structure is a model structure meeting a performance index condition; and determining, for each of the plurality of chips, the target model structure corresponding to the chip as a pre-training model corresponding to the chip, the chip is configured to run the pre-training model corresponding to the chip.

## Description

### TECHNICAL FIELD

The present disclosure relates to a field of an artificial intelligence technology, in particular to a computer vision and deep learning technology, and more specifically, to a method and an apparatus of generating a pre-training model, an electronic device, and a storage medium.

### BACKGROUND

The pre-training model may refer to a task-independent model acquired by training a preset model with a large number of training data. For a downstream task, the pre-training model may be fine tuned by using a small amount of training data related to the downstream task so as to acquire a model for processing the downstream task. For example, the downstream task may include an image processing task, an audio processing task, or a text processing task, etc.

### SUMMARY

The present disclosure provides a method and an apparatus of generating a pre-training model, an electronic device, and a storage medium.

According to one aspect of the present disclosure, a method of generating a pre-training model is provided, including: determining a performance index set corresponding to a candidate model structure set, wherein the candidate model structure set is determined from a plurality of model structures included in a search space, and the search space is a super-network-based search space; determining, from the candidate model structure set, a target model structure corresponding to each of a plurality of chips according to the performance index set, wherein each target model structure is a model structure meeting a performance index condition; and determining, for each of the plurality of chips, the target model structure corresponding to the chip as a pre-training model corresponding to the chip, wherein the chip is configured to run the pre-training model corresponding to the chip.

According to another aspect of the present disclosure, an apparatus of generating a pre-training model is provided, including: a first determination module configured to determine a performance index set corresponding to a candidate model structure set, wherein the candidate model structure set is determined from a plurality of model structures included in a search space, and the search space is a super-network-based search space; a second determination module configured to determine, from the candidate model structure set, a target model structure corresponding to each of a plurality of chips according to the performance index set, wherein each target model structure is a model structure meeting a performance index condition; and a third determination module configured to determine, for each of the plurality of chips, the target model structure corresponding to the chip as a pre-training model corresponding to the chip, wherein the chip configured to run the pre-training model corresponding to the chip.

According to another aspect of the present disclosure, an electronic device is provided, including: at least one processor; and a memory communicatively connected to the at least one processor; wherein the memory stores instructions executable by the at least one processor, and the instructions, when executed by the at least one processor, cause the at least one processor to perform the method as described above.

According to another aspect of the present disclosure, a non-transitory computer-readable storage medium having computer instructions therein is provided, and the computer instructions are configured to cause the computer to perform the method as described above.

According to another aspect of the present disclosure, a computer program product including a computer program is provided, and the computer program, when executed by a processor, implements the method as described above.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, in which:
FIG. 1 schematically shows an exemplary system architecture to which a method and an apparatus of generating a pre-training model may be applied according to embodiments of the present disclosure;
FIG. 2 schematically shows a flowchart of a method of generating a pre-training model according to embodiments of the present disclosure;
FIG. 3 schematically shows a schematic diagram of a process of generating a pre-training model according to embodiments of the present disclosure;
FIG. 4 schematically shows an exemplary diagram of a process of determining a target model structure according to embodiments of the present disclosure;
FIG. 5 schematically shows a block diagram of an apparatus of generating a pre-training model according to embodiments of the present disclosure; and
FIG. 6 schematically shows a block diagram of an electronic device adapted to implement a method of generating a pre-training model according to embodiments of the present disclosure.

### DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

The pre-training model may be generated by the following two methods.

One method is to generate the pre-training model by using an artificial-design-based model structure. That is, the pre-training model may be obtained through the artificially designed model structure. For example, the artificially designed model structure may include a ResNet (Deep Residual Network)-based model structure or a Transformer-based model structure.

The other method is to generate the pre-training model by using a model structure obtained based on an automatic deep learning (i.e., AutoDL) search. That is, an AutoDL-based model structure may be obtained by using an ImageNet dataset based on an automatic search method. The pre-training model may be generated by using the AutoDL-based model structure.

For one method of the above-mentioned methods, a prediction precision of the pre-training model generated by using the artificial-design-based model structure is not high. For the other method, a data distribution between the ImgaeNet dataset and a training set used by an actual data processing task is different. Therefore, a prediction precision of the pre-training model generated by using the AutoDL-based model structure is also not high.

To this end, embodiments of the present disclosure propose a solution of generating a pre-training model, that is, for each of a plurality of chips, a target model structure corresponding to each chip that meets a performance index condition is determined from the candidate model structure set according to the performance index set of the candidate model structure set, each target model structure is determined as a pre-training model corresponding to the chip, and the candidate model structure set is determined from a super-network-based search space. For each chip, the pre-training model that meets the performance index condition may be acquired by automatically searching, which may improve a prediction precision of the pre-training model. Therefore, a smaller-scale pre-training mode may achieve the same prediction precision as that of a larger-scale pre-training model, and the smaller-scale pre-training model may have a faster training speed. On this basis, if the pre-training model is applied to the chip to perform a data processing task, a core competitiveness of related products may be improved.

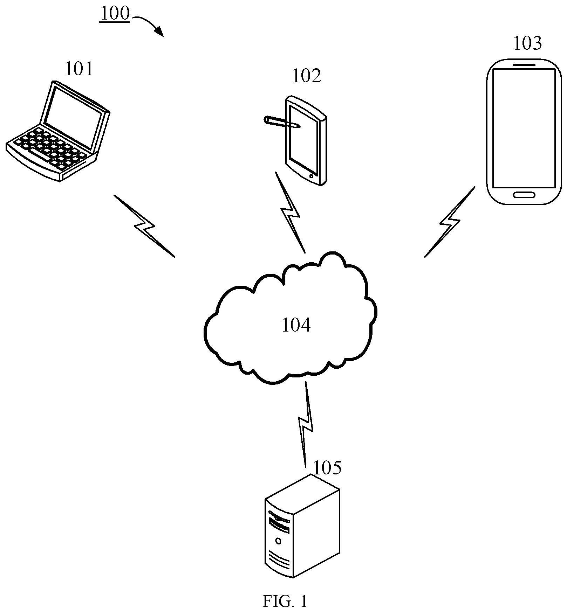

FIG. 1 schematically shows an exemplary system architecture to which a method and an apparatus of generating a pre-training model may be applied according to embodiments of the present disclosure.

It should be noted that FIG. 1 is only an example of a system architecture to which embodiments of the present disclosure may be applied to help those skilled in the art understand the technical content of the present disclosure, but it does not mean that embodiments of the present disclosure may not be applied to other devices, systems, environments or scenarios. For example, in other embodiments, an exemplary system architecture to which the method and the apparatus of generating the pre-training model may be applied may include a terminal device, but the terminal device may implement the method and the apparatus of generating the pre-training model provided in embodiments of the present disclosure without interacting with a server.

As shown in FIG. 1, a system architecture 100 according to such embodiments may include terminal devices 101, 102, 103, network 104, and server 105. The network 104 is a medium used to provide a communication link between the terminal devices 101, 102, 103 and the server 105. The network 104 may include various connection types, such as wired and/or wireless communication links, etc.

The terminal devices 101, 102, 103 used by a user may interact with the server 105 via the network 104, so as to receive or send messages, etc. Various communication client applications may be installed on the terminal devices 101, 102, 103, such as knowledge reading applications, web browser applications, search applications, instant messaging tools, mailbox clients and/or social platform software, etc. (for example only).

The terminal devices 101, 102 and 103 may be various electronic devices having display screens and supporting web browsing, including but not limited to smartphones, tablet computers, laptop computers, desktop computers, etc.

The server 105 may be a server of various types that provides various services, such as a background management server (for example only) that provides a support for a content browsed by the user using the terminal devices 101, 102, 103. The background management server may analyze and process a received user request and other data, and feed back a processing result (e.g., web page, information or data acquired or generated according to the user request) to the terminal devices.

The server 105 may be a cloud server, also known as a cloud computing server or a cloud host, which is a host product in a cloud computing service system to solve shortcomings of difficult management and weak business scalability existing in an existing physical host and VPS (Virtual Private Server) service. The server 105 may also be a server of a distributed system, or a server combined with a block-chain.

It should be noted that the method of generating the pre-training model provided by embodiments of the present disclosure may generally be performed by the server 105. Accordingly, the apparatus of generating the pre-training model provided by embodiments of the present disclosure may generally be provided in the server 105. The method of generating the pre-training model provided by embodiments of the present disclosure may also be performed by a server or a server cluster different from the server 105 and capable of communicating with the terminal devices 101, 102, 103 and/or the server 105. Accordingly, an apparatus of processing a content provided by embodiments of the present disclosure may also be provided in the server or server cluster different from the server 105 and capable of communicating with the terminal devices 101, 102, 103 and/or the server 105.

Alternatively, the method of generating the pre-training model provided by embodiments of the present disclosure may generally be performed by the terminal device 101, 102, or 103. Accordingly, the apparatus of generating the pre-training model provided by embodiments of the present disclosure may also be provided in the terminal device 101, 102, or 103.

It should be understood that the number of terminal devices, network and server shown in FIG. 1 is only schematic. According to the implementation needs, any number of terminal devices, network and server may be provided.

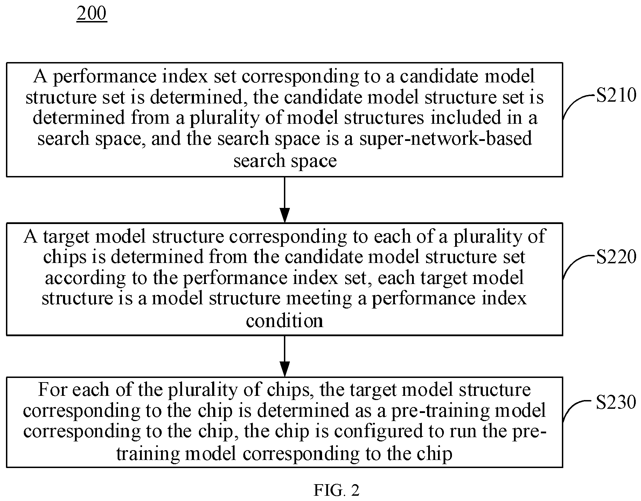

FIG. 2 schematically shows a flowchart of a method of generating a pre-training model according to embodiments of the present disclosure.

As shown in FIG. 2, the method 200 includes operations S210 to S230.

In operation S210, a performance index set corresponding to a candidate model structure set is determined. The candidate model structure set is determined from a plurality of model structures included in a search space, and the search space is a super-network-based search space.

In operation S220, a target model structure corresponding to each of a plurality of chips is determined from the candidate model structure set according to the performance index set. Each target model structure is a model structure meeting a performance index condition.

In operation S230, for each of the plurality of chips, the target model structure corresponding to the chip is determined as a pre-training model corresponding to the chip. The chip is configured to run the pre-training model corresponding to the chip.

According to embodiments of the present disclosure, an initial search space may refer to a space for providing a model structure. The initial search space may include one or more super-network-based search spaces. The initial search space may be a full amount of search space.

According to embodiments of the present disclosure, the initial search space may include at least one type of search space. For example, the initial search space may include at least one of a ResNet (Residual Neural Network)-based search space, a MobileNet-based search space, a Transformer-based search space, a heterogeneous search space, etc. The heterogeneous search space may refer to a search space that includes different types of search spaces.

According to embodiments of the present disclosure, the initial search space may include a plurality of model structures. The model structure may be a model structure for performing a data processing task (i.e., a downstream task). The data processing task may include at least one of an image processing task, an audio processing task, a text processing task, etc. Each model structure may include at least one model substructure and a connection relationship between different model substructures. Each model structure may be a structure acquired by connecting the at least one model substructure based on the connection relationship between the different model substructures. The at least one model substructure included in each model structure may be a structure from at least one operation layer, that is, each model structure may be a structure acquired by connecting the at least one model substructure from the at least one operation layer based on the connection relationship between the different model substructures. For example, the at least one operation layer may include at least one of an input layer, a convolutional layer, a pooling layer, a fully connected layer, a batch normalization layer, a nonlinear layer, etc. The at least one model substructure may include at least one of a convolutional structure (i.e., convolutional kernel), a pooling structure (i.e., pooling kernel), a fully connected structure and a normalization structure. The different model substructures may have the same or different super parameters. The super parameters of the model substructure may include at least one of a size of the model substructure, the number and step size of the model substructure, etc. For example, super parameters of the convolutional structure may include a size of the convolutional structure, the number and convolutional step size of the convolutional structure, etc. The connection relationship may include at least one of addition, channel merging, etc.

According to embodiments of the present disclosure, the initial search space may be generated according to a generation strategy of the search space. The generation strategy may be determined based on generation requirements. For example, the number of expected model substructures, a type of the model substructures, and a connection relationship between the model substructures may be determined according to the generation requirements. At least one model substructure may be determined according to the number and the type of model substructures. The at least one model substructure is connected based on the connection relationship between the model substructures, so as to acquire at least one model structure. The initial search space is acquired according to the at least one model structure.

According to embodiments of the present disclosure, the super-network may be a network including a plurality of model structures determined from the initial search space according to a search strategy. The search strategy may refer to a strategy for determining the super-network from the initial search space. Therefore, it may be considered that the super-network-based search space is a subspace of the initial search space, and thus a composition of the super-network-based search space is the same as that of the initial search space, that is, the super-network-based search space may include a plurality of model structures. Each model structure may include at least one model substructure and a connection relationship between different model substructures. The super-network-based search space may be a search space of all model structures included in the super-network. After the super-network is trained, model parameters of each model structure included in the trained super-network may be determined, that is, the model parameters of each of the plurality of model structures included in the super-network-based search space may be determined. The super-network-based search space is a search space based on a trained super-network.

According to embodiments of the present disclosure, the candidate model structure set may refer to a set for determining a target model structure. The candidate model set may be determined from a plurality of model structures included in the search space based on a screening strategy. The candidate model structure set may include a plurality of model structures. The model structures included in the candidate model structure set may be called candidate model structures, that is, the candidate model structure set may include a plurality of candidate model structures. The screening strategy may be determined based on screening requirements. For example, the number of the expected model structures and one or more types of the model structures may be determined based on the screening requirements. A plurality of model structures matching the number and the type of the expected model structures may be searched from the search space. According to the plurality of model structures, the candidate model structure set may be acquired. The plurality of model structures matching the number and the type of the expected model structures may be searched from the search space based on a random sampling strategy. The number of candidate model structures included in the candidate model structure set may be greater than or equal to a predetermined number threshold. For example, the predetermined number threshold is one million.

According to embodiments of the present disclosure, the performance index set may include a plurality of performance indexes. A performance index item has a performance index corresponding to the performance index item. The performance index item may be used as an index to evaluate a performance of the model structure. The performance index may be used as an index value to evaluate a performance of a candidate model structure. At least one performance index item may include at least one of a prediction precision, a running speed, a hardware delay duration, a memory utilization, a processor power consumption, an operation efficiency, etc. Accordingly, at least one performance index may include at least one of a prediction precision value, a running speed value, a hardware delay duration value, a memory utilization value, a processor power consumption value, an operation efficiency value, etc.

According to embodiments of the present disclosure, the target model structure corresponding to each of a plurality of chips needs to be determined from a plurality of candidate model structures. Therefore, the plurality of performance indexes corresponding to each candidate model structure include at least one performance index corresponding to each of the plurality of chips. Each candidate model structure may be evaluated by using the at least one performance index item. Each performance index item has a performance index corresponding to the performance index item. Therefore, each candidate model structure has at least one performance index corresponding to the candidate model structure.

According to embodiments of the present disclosure, for each of the plurality of chips, each chip has at least one performance index corresponding to each of the plurality of candidate model structures. Thus, each chip has a performance index subset corresponding to the chip. The performance index set corresponding to the candidate model structure set includes a performance index subset corresponding to each of the plurality of chips. Each candidate model structure may be evaluated by using the at least one performance index item. Therefore, if the performance index subset corresponding to each chip is divided according to the performance index item, the performance index subset corresponding to each chip may include at least one performance index class set. Each performance index class set includes a plurality of performance indexes that belong to the same performance index item.

According to embodiments of the present disclosure, the performance index condition may be used as a condition for determining the target model structure from the candidate model structure set. For example, the performance index may include at least one of a prediction precision and a running speed. The performance index condition may include at least one of a precision evaluation condition and a speed evaluation condition. Each target model structure being a model structure meeting a performance index condition may include at least one of: the target model structure being a model structure whose prediction precision meets the precision evaluation condition; the target model structure being a model structure whose running speed meets the speed evaluation condition.

According to embodiments of the present disclosure, the super-network may be determined from the initial search space according to the search strategy. The candidate model structure set may be determined from the plurality of model structures included in the super-network-based search space based on the screening strategy. For each of the plurality of candidate model structures included in the candidate model structure set, at least one performance index corresponding to each of the plurality of chips in the candidate model structure may be determined by using a performance structure association relationship. The performance structure association relationship may represent an association relationship between the model structure and a performance index of the model structure.

According to embodiments of the present disclosure, after the at least one performance index corresponding to each of the plurality of chips in each candidate model structure is determined, for each of the plurality of chips, the target model structure corresponding to the chip may be determined from the plurality of candidate model structures according to the performance index condition and the at least one performance index corresponding to the chip in each of the plurality of candidate model structures.

According to embodiments of the present disclosure, the determining, for each of the plurality of chips, the target model structure corresponding to the chip from the plurality of candidate model structures according to the performance index condition and the at least one performance index corresponding to the chip in each of the plurality of candidate model structures may include: ranking, for each chip of the plurality of chips, the plurality of performance indexes included in each of at least one performance index class set corresponding to the chip, so as to acquire a ranking result corresponding to each performance index class set. The target model structure corresponding to the chip may be determined from the plurality of candidate model structures according to the ranking result of each of a plurality of performance index class sets corresponding to the chip. The ranking may include ranking in an order of the performance indexes from small to large or in an order of the performance indexes from large to small. Different performance index class sets may have the same or different ranking methods. The ranking method of each performance index class set may be configured according to actual business requirements, which will not be limited here.

According to embodiments of the present disclosure, the determining the target model structure corresponding to the chip from the plurality of candidate model structures according to the ranking result of each of a plurality of performance index class sets corresponding to the chip may include: performing a weighted summation on a plurality of ranking results corresponding to the chip, and determining the target model structure corresponding to the chip from the plurality of candidate model structures according to a result of weighted summation.

According to embodiments of the present disclosure, different performance index items may have different levels. For each of the plurality of chips, an analysis sequence may be determined according to the level of the performance index item. The target model structure corresponding to the chip may be determined from the plurality of candidate model structures included in the candidate model structure set according to the analysis sequence and each of the plurality of performance index class sets corresponding to the chip.

According to embodiments of the present disclosure, for each of the plurality of chips, a target model structure corresponding to each chip that meets a performance index condition is determined from the candidate model structure set according to the performance index set of the candidate model structure set, each target model structure is determined as the pre-training model corresponding to the chip, and the candidate model structure set is determined from the super-network-based search space. For each chip, the pre-training model that meets the performance index condition may be acquired by automatically searching, which may improve a prediction precision of the pre-training model. Therefore, a smaller-scale pre-training mode may achieve the same prediction precision as that of a larger-scale pre-training model, and the smaller-scale pre-training model may have a faster training speed. On this basis, if the pre-training model is applied to the chip to perform a data processing task, a core competitiveness of related products may be improved.

According to embodiments of the present disclosure, the above-mentioned method of generating the pre-training model may further include the following operations.

A super-network is trained by using a training set, so as to acquire a trained super-network. The search space is acquired based on the trained super-network.

According to embodiments of the present disclosure, the super-network may be trained by using the training set. The training set may include a plurality of training data. The training data may be sample data acquired by the server through the terminal device, sample data acquired by the server from a local storage, or the sample data acquired through the Internet and other channels.

According to embodiments of the present disclosure, the super-network may be determined from the initial search space according to the search strategy. The super-network may be trained by using the training set based on a loss function, so as to acquire a trained super-network. For example, an output value of the loss function may be acquired by using the training set based on the loss function. According to the output value of the loss function, model parameters of the super-network may be adjusted until a predetermined condition is met, and the super-network acquired when the predetermined condition is met may be determined as the trained super-network.

According to embodiments of the present disclosure, after the trained super-network is acquired, the super-network-based search space may be acquired based on the trained super-network. The super-network-based search space may be a search space of all model structures included in the super-network. After the super-network is trained, model parameters of each model structure included in the super-network may be determined. Therefore, the model parameters of each of the plurality of model structures included in the super-network-based search space may also be determined.

According to embodiments of the present disclosure, the operation S210 may include the following operation.

The candidate model structure set is processed by using a performance predictor, so as to acquire the performance index set corresponding to the candidate model structure set.

According to embodiments of the present disclosure, the performance predictor may be used to predict a performance of a model structure. The performance predictor may be a model that represents a relationship between the model structure and the performance of the model structure. The performance predictor, which represents the relationship between the model structure and the performance of the model structure, may be a model acquired by training a machine learning model or deep learning model. For example, the machine learning model may include a random forest model or ridge regression model. The performance predictor, which represents the relationship between the model structure and the performance of the model structure, may also be a model that uses a statistical model. The statistical model may include a probability distribution model. For example, the probability distribution model may include a Gaussian distribution model or the like.

According to embodiments of the present disclosure, each of the plurality of candidate model structures included in the candidate model set may be input into the performance predictor, so as to acquire at least one performance index corresponding to the candidate model structure.

According to embodiments of the present disclosure, the above-mentioned method of generating the pre-training model may further include the following operations.

An evaluation model structure set is determined from the search space. The performance predictor is acquired by using the evaluation model structure set.

According to embodiments of the present disclosure, the evaluation model structure set may include a plurality of model structures. The model structures included in the evaluation model structure set may be called evaluation model structures. The evaluation model structure may refer to a representative model structure in the super-network-based search space. Representativeness may indicate that characteristics of a model structure in a search space may be characterized. Model parameters of the evaluation model structure may be determined according to model parameters of a model structure corresponding to the evaluation model structure in the super-network, that is, the model parameters of the evaluation model structure may be consistent with the model parameters of the model structure corresponding to the evaluation model structure in the super-network. The evaluation model structure may be used to participate in building the performance predictor.

According to embodiments of the present disclosure, a plurality of model structures may be determined from the search space based on a representative strategy, and the evaluation model structure set may be acquired according to the plurality of model structures. The performance predictor may be acquired by using the evaluation model structure set based on an evaluation set. The evaluation set may include a plurality of training samples.

According to embodiments of the present disclosure, the acquiring the performance predictor by using the evaluation model structure set based on an evaluation set may include: processing the evaluation set by using the evaluation model structure set, so as to acquire a performance index set corresponding to the evaluation model structure set; acquiring the performance predictor by using the evaluation model structure set, the performance index set corresponding to the evaluation model structure set and a predetermined model.

According to embodiments of the present disclosure, the acquiring the performance predictor by using the evaluation model structure set, the performance index set corresponding to the evaluation model structure set and a predetermined model may include: updating super parameters of an initial probability model by a prediction method based on the performance index set corresponding to the evaluation model structure set, so as to acquire a prediction value of the super parameters. The performance predictor may be determined based on the prediction value of the super parameters. The initial probability model may be a probability distribution model acquired by initializing a probability distribution model corresponding to the initial search space.

According to embodiments of the present disclosure, the acquiring the performance predictor by using the evaluation model structure set, the performance index set corresponding to the evaluation model structure set and a predetermined model may include: training the machine learning model or the deep learning model by using the evaluation model structure set and the performance index set corresponding to the evaluation model structure set, so as to acquire the performance predictor.

According to embodiments of the present disclosure, the performance index set may include at least one of: a precision evaluation value set and a speed evaluation value set. The performance predictor may include at least one of: a precision predictor and a speed predictor.

According to embodiments of the present disclosure, the acquiring the performance predictor by using the evaluation model structure set may include at least one of: processing an evaluation set by using the evaluation model structure set, so as to acquire a precision evaluation value set corresponding to the evaluation model structure set; acquiring the precision predictor by using the evaluation model structure set and the precision evaluation value set corresponding to the evaluation model structure set; running, for each of the plurality of chips, the evaluation model structure set on the chip, so as to acquire a speed evaluation value set of the chip running the evaluation model structure set; and acquiring the speed predictor by using the evaluation model structure set and the speed evaluation value set of each chip running the evaluation model structure set.

According to embodiments of the present disclosure, the precision predictor may be used to predict a prediction precision value of the model structure. The speed predictor may be used to predict a running speed value of the model structure. The precision evaluation value set may include a plurality of prediction precision values. The speed evaluation value set may include a plurality of running speed values.

According to embodiments of the present disclosure, when the chip is determined, for each of a plurality of evaluation model structures included in the evaluation model structure set, a precision evaluation value corresponding to the evaluation model structure may be acquired by inputting the evaluation set into the evaluation model structure. The precision predictor may be acquired by using the evaluation model structure set, the precision evaluation value set corresponding to the evaluation model structure set and a first predetermined model. The first predetermined model may include a machine learning model, a deep learning model or a statistical model, etc.

According to embodiments of the present disclosure, for each of the plurality of chips, each of the plurality of evaluation model structures included in the evaluation model structure set is run on the chip, so as to acquire a running speed of the chip running each evaluation model structure set. The speed predictor may be acquired by using the evaluation model structure set, the speed evaluation value set of each chip running the evaluation model structure set and a second predetermined model. The second predetermined model may include a machine learning model, a deep learning model, or a statistical model, etc.

According to embodiments of the present disclosure, the above-mentioned method of training the pre-training model may further include the following operation.

An evaluation model code set corresponding to the evaluation model structure set is determined.

According to embodiments of the present disclosure, the acquiring the precision predictor by using the evaluation model structure set and the precision evaluation value set corresponding to the evaluation model structure set may include the following operation.

The precision predictor is acquired by using the evaluation model code set corresponding to the evaluation model structure set and the precision evaluation value set corresponding to the evaluation model structure set.

According to embodiments of the present disclosure, the acquiring the speed predictor by using the evaluation model structure set and the speed evaluation value set of each chip running the evaluation model structure set may include the following operation.

The speed predictor is acquired by using the evaluation model code set corresponding to the evaluation model structure set and the speed evaluation value set of each chip running the evaluation model structure set.

According to embodiments of the present disclosure, the model structure may be characterized by model codes, that is, each evaluation model structure in the evaluation model structure set may be processed by using a code generator, so as to acquire evaluation model codes corresponding to each evaluation model structure.

According to embodiments of the present disclosure, the determining an evaluation model structure set from the search space may include the following operations.

An information entropy corresponding to each of the plurality of model structures included in the search space is determined. The evaluation model structure set is determined from the search space according to the information entropy corresponding to each of the plurality of model structures included in the search space.

According to embodiments of the present disclosure, the information entropy may be used to characterize a measurement of an amount of information. The evaluation model structure set may be determined from the plurality of model structures included in the search space by using the information entropy of the model structure.

According to embodiments of the present disclosure, model codes of each of the plurality of model structures included in the search space may be determined. A covariance matrix is determined according to super parameters of a probability model and the model codes of each model structure. The information entropy of each model structure is determined according to the covariance matrix. The above-mentioned method of determining the information entropy of the model structure is only an exemplary embodiment, but the present disclosure is not limited to this. The method may also include determination methods known in the art, as long as a determination of the information entropy of the model structure may be achieved.

According to embodiments of the present disclosure, the determining the evaluation model structure set from the search space according to the information entropy corresponding to each of the plurality of model structures included in the search space may include: ranking for the information entropy corresponding to each of the plurality of model structures included in the search space. The evaluation model structure set is determined from the search space according to a ranking result. The ranking may include ranking in an order of the information entropy from small to large or ranking in an order of the information entropy from large to small. For example, each of the plurality of model structures included in the search space may be ranked according to the order of the information entropy of the model structure from large to small, and a predetermined number of model structures ranked top in the ranking result may be determined as the evaluation model structure set. Alternatively, the evaluation model structure set may be determined from the plurality of model structures included in the search space according to an information entropy threshold and the information entropy corresponding to each of the plurality of model structures included in the search space. For example, for each of the plurality of model structures included in the search space, when it is determined that the information entropy of the model structure is greater than or equal to the information entropy threshold, the model structure may be determined as the evaluation model structure.

According to embodiments of the present disclosure, the determining an evaluation model structure set from the search space may include the following operations.

At least one cluster center corresponding to the search space is determined according to the plurality of model structures included in the search space. The evaluation model structure set is acquired according to the at least one cluster center corresponding to the search space.

According to embodiments of the present disclosure, the model structure in the plurality of model structures included in the search space may be processed by using a clustering algorithm, so as to acquire the at least one cluster center corresponding to the search space. The clustering algorithm may include a K-means clustering algorithm, a K-center clustering algorithm, a CLARA (Clustering LARge Application) algorithm or a fuzzy C-means algorithm.

According to embodiments of the present disclosure, each of the at least one cluster center corresponding to the search space may be determined as the evaluation model structure.

According to embodiments of the present disclosure, the precision evaluation value set includes a precision evaluation value set corresponding to each of the plurality of chips, and the precision evaluation value set corresponding to each of the plurality of chips includes a plurality of prediction precision values.

According to embodiments of the present disclosure, the speed evaluation value set includes a speed evaluation value set corresponding to each of the plurality of chips, and the speed evaluation value set corresponding to each of the plurality of chips includes a plurality of running speed values.

According to embodiments of the present disclosure, the operation S220 may include the following operations.

For each of the plurality of chips, the plurality of prediction precision values included in the precision evaluation value set corresponding to the chip are ranked, so as to acquire a ranking result corresponding to the precision evaluation value set of the chip. The plurality of running speed values included in the speed evaluation value set corresponding to the chip are ranked, so as to acquire a ranking result corresponding to the speed evaluation value set of the chip. The target model structure corresponding to the chip is determined according to the ranking result corresponding to the precision evaluation value set of the chip and the ranking result corresponding to the speed evaluation value set of the chip.

According to embodiments of the present disclosure, the determining the target model structure corresponding to the chip according to the ranking result corresponding to the precision evaluation value set of the chip and the ranking result corresponding to the speed evaluation value set of the chip may include: performing a weighted summation on the ranking result corresponding to the precision evaluation value set of the chip and the ranking result corresponding to the speed evaluation value set of the chip, and determining the target model structure corresponding to the chip from the plurality of candidate model structures according to a result of weighted summation.

For example, there are two performance index items, i.e., a prediction precision and a running speed. There are two chips, i.e., a chip A and a chip B. The candidate model structure set includes three candidate model structures, i.e., a candidate model structure a, a candidate model structure b and a candidate model structure c. The performance index set corresponding to the candidate model structure set includes a performance index subset corresponding to the chip A, a performance index subset corresponding to the chip B, and a performance index subset corresponding to the chip C. The performance index subset corresponding to the chip A includes two performance index class sets corresponding to the chip A, i.e., a precision evaluation value set E_{Ap} and a speed evaluation value set E_{As} corresponding to the chip A. The performance index subset corresponding to the chip B includes two performance index class sets corresponding to the chip B, i.e., a precision evaluation value set E_{Bp} and a speed evaluation value set E_{Bp} corresponding to the chip B.

For the candidate model structure a, it is determined that a prediction precision value corresponding to the chip A is a prediction precision value Aₐₚ, and a running speed value corresponding to the chip A is a running speed value Aₐₛ. A prediction precision value corresponding to the chip B is a prediction precision value B_{bp}, and a running speed value corresponding to the chip B is a running speed value B_{bs}.

For the candidate model structure b, it is determined that the prediction precision value corresponding to the chip A is a prediction precision value A_{bp}, and the running speed value corresponding to the chip A is a running speed value A_{bs}. The prediction precision value corresponding to the chip B is a prediction precision value B_{bp}, and the running speed value corresponding to the chip B is a running speed value B_{bs}.

For the candidate model structure c, it is determined that the prediction precision value corresponding to the chip A is a prediction precision value A_{cp}, and the running speed value corresponding to the chip A is a running speed value A_{cs}. The prediction precision value corresponding to the chip B is a prediction precision value B_{cp}, and the running speed value corresponding to the chip B is a running speed value B_{cs}.

The precision evaluation value set E_{Ap} may include the prediction precision value Aₐₚ, the prediction precision value A_{bp}, and the prediction precision value A_{cp}. The speed evaluation value set E_{As} may include the running speed value Aₐₛ, the running speed value A_{bs}, and the running speed value A_{cs}.

The precision evaluation value set E_{Bp} may include the prediction precision value Bₐₚ, the prediction precision value B_{bp} and the prediction precision value B_{cp}. The speed evaluation value set E_{As} may include the running speed value Bₐₛ, the running speed value B_{bs}, and the running speed value B_{cs}.

For the chip A, the prediction precision value Aₐₚ, the prediction precision value A_{bp} and the prediction precision value A_{cp} included in the precision evaluation value set E_{Ap} corresponding to the chip A are ranked in an order of the prediction precision value from large to small, so as to acquire a ranking result corresponding to the precision evaluation value set E_{Ap}, that is, the prediction precision value Aₐₚ, the prediction precision value A_{bp} and the prediction precision value A_{cp}.

For the chip A, the running speed value Aₐₛ, the running speed value A_{bs} and the running speed value A_{cs} included in the speed evaluation value set E_{As} corresponding to the chip A are ranked in an order of the running speed value from large to small, so as to acquire a ranking result corresponding to the speed evaluation value set E_{As}, that is, the running speed value Bₐₛ, the running speed value B_{bs} and the running speed value B_{cs}.

The performance of the model structure is better when the prediction precision value is higher and the running speed value is higher. Therefore, for the chip A, the candidate model structure a may be determined from the candidate model structure a, the candidate model structure b, and the candidate model structure c as the target model structure corresponding to the chip A according to the ranking result corresponding to the precision evaluation value set E_{Ap} and the ranking result corresponding to the speed evaluation value set E_{As}.

In the same way, for the chip B, the candidate model structure c may be determined from the candidate model structure a, the candidate model structure b and the candidate model structure c as a target model structure corresponding to the chip B according to a ranking result corresponding to the precision evaluation value set E_{Bp} and a ranking result corresponding to the speed evaluation value set E_{Bs}.

According to embodiments of the present disclosure, the operation S230 may include the following operations.

For each of the plurality of chips, at least one candidate model structure corresponding to each of at least one predetermined running speed value is searched for from the speed evaluation value set corresponding to the chip. For each of the at least one predetermined running speed value, the at least one candidate model structure corresponding to the predetermined running speed value is ranked according to the precision evaluation value set corresponding to the chip, so as to acquire a ranking result of the at least one candidate model structure corresponding to the predetermined running speed value. The target model structure corresponding to the chip is determined from the at least one candidate model structure corresponding to the predetermined running speed value according to the ranking result of the at least one candidate model structure corresponding to the predetermined running speed value.

According to embodiments of the present disclosure, the predetermined running speed value may be a running speed value in the speed evaluation value set. For example, the at least one predetermined running speed value may include at least one of 1ms, 2ms, ..., 99ms and 100ms.

According to embodiments of the present disclosure, the ranking may be performed in the order of the prediction precision value from large to small or an order of the prediction precision value from small to large.

For example, the at least one candidate model structure corresponding to each of the at least one predetermined running speed value may be ranked according to the precision evaluation value set corresponding to the chip in the order of the prediction precision values from large to small, so as to acquire the ranking result of the at least one candidate model structure corresponding to the predetermined running speed value. A candidate model structure ranked top in the ranking result may be determined as the target model structure corresponding to the chip.

The above is only an exemplary embodiment, but the present disclosure is not limited to this. The method of generating the pre-training model may further include other methods of generating a pre-training model known in the art, as long as a prediction precision of the pre-training model may be improved.

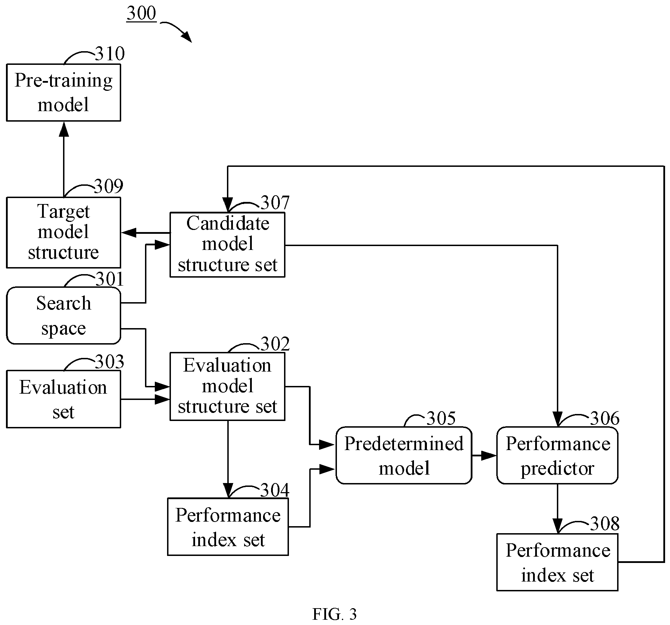

With reference to FIG. 3 to FIG. 4, the method of generating the pre-training model described in embodiments of the present disclosure will be further described below in combination with specific embodiments.

FIG. 3 schematically shows a schematic diagram of a process of generating a pre-training model according to embodiments of the present disclosure.

As shown in FIG. 3, in 300, an evaluation model structure set 302 is determined from a super-network-based search space 301. An evaluation set 303 is processed by using the evaluation model structure 302, so as to acquire a performance index set 304 corresponding to the evaluation model structure set 302.

A performance predictor 306 is acquired by using the evaluation model structure set 302, the performance index set 304 corresponding to the evaluation model structure set 302, and a predetermined model 305.

A candidate model structure set 307 is determined from the super-network-based search space 301. The candidate model structure set 307 is processed by using the performance predictor 306, so as to acquire a performance index set 308 corresponding to the candidate model structure set 307.

According to the performance index set 308, a target model structure 309 corresponding to each of a plurality of new chips is determined from the candidate model structure set 307.

The target model structure 309 corresponding to each chip is determined as a pre-training model 310 corresponding to the chip.

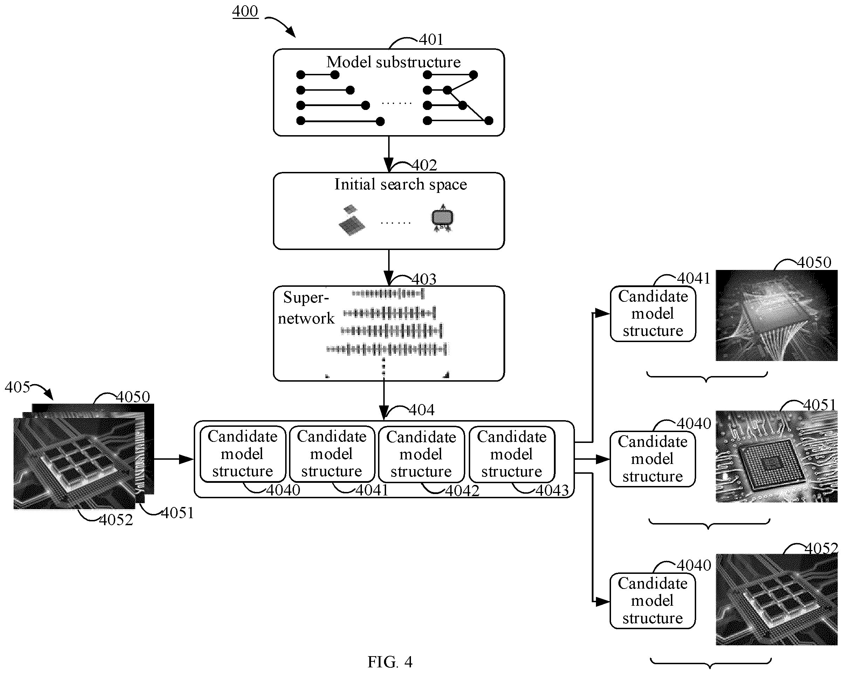

In order to facilitate understanding the process of generating the pre-training model shown in FIG. 3, a process of determining a target model structure will be described below in combination with FIG. 4.

FIG. 4 schematically shows an exemplary diagram of a process of determining a target model structure according to embodiments of the present disclosure.

As shown in FIG. 4, in 400, an initial search space 402 may include a plurality of model structures. Each model structure may include at least one model substructure 401.

A super-network 403 is determined from the initial search space 402 based on a search strategy. The super-network 403 is trained by using a training set, so as to acquire a trained super-network. A candidate model structure set 404 is determined from the super-network search space based on the super-network 403. The candidate model structure set 404 includes a candidate model structure 4040, a candidate model structure 4041, a candidate model structure 4042, and a candidate model structure 4043.

The candidate model structure set 404 is processed by using the performance predictor, so as to acquire a performance index set corresponding to the candidate model structure set 404.

According to the performance index set corresponding to the candidate model structure set 404, a target model structure corresponding to each of a plurality of chips included in a chipset 405 is determined from the candidate model structure set 404. A target model structure corresponding to a chip 4050 included in the chipset 405 is the candidate model structure 4041. A target model structure corresponding to a chip 4051 included in the chipset 405 is the candidate model structure 4040. A target model structure corresponding to a chip 4052 included in the chipset 405 is the candidate model structure 4040.

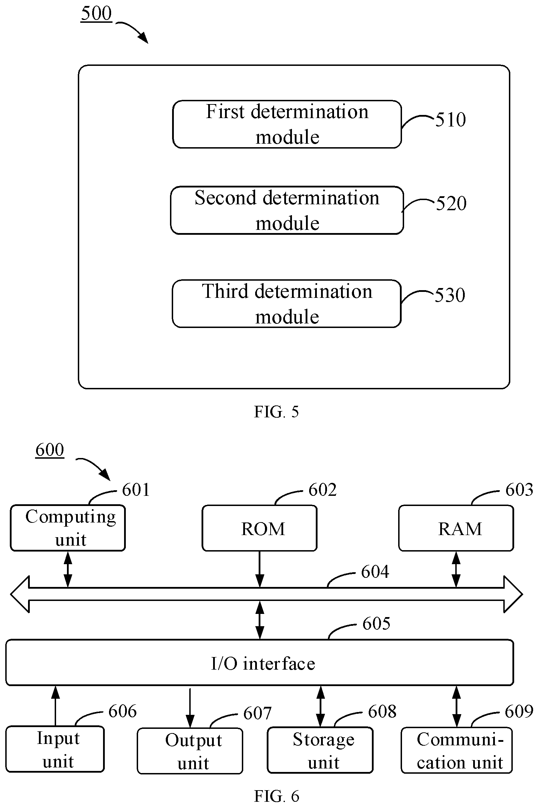

FIG. 5 schematically shows a block diagram of an apparatus of generating a pre-training model according to embodiments of the present disclosure.

As shown in FIG. 5, an apparatus 500 of generating a pre-training model may include a first determination module 510, a second determination module 520, and a third determination module 530.

The first determination module 510 is used to determine a performance index set corresponding to a candidate model structure set. The candidate model structure set is determined from a plurality of model structures included in a search space, and the search space is a super-network-based search space.

The second determination module 520 is used to determine, from the candidate model structure set, a target model structure corresponding to each of a plurality of chips according to the performance index set. Each target model structure is a model structure meeting a performance index condition.

The third determination module 530 is used to determine, for each of the plurality of chips, the target model structure corresponding to the chip as a pre-training model corresponding to the chip. The chip is used to run the pre-training model corresponding to the chip.

According to embodiments of the present disclosure, the above-mentioned apparatus 500 of generating the pre-training model may further include a first acquisition module and a second acquisition module.

The first acquisition module is used to train a super-network by using a training set, so as to acquire a trained super-network.

The second acquisition module is used to acquire the search space based on the trained super-network.

According to embodiments of the present disclosure, the first determination module 510 may include a first acquisition sub-module.

The first acquisition sub-module is used to process the candidate model structure set by using a performance predictor, so as to acquire the performance indicator set corresponding to the candidate model structure set.

According to embodiments of the present disclosure, the above-mentioned apparatus 500 of generating the pre-training model may further include a fourth determination module and a third acquisition module.

The fourth determination module is used to determine an evaluation model structure set from the search space.

The third acquisition module is used to acquire the performance predictor by using the evaluation model structure set.

According to embodiments of the present disclosure, the performance index set includes at least one of: a precision evaluation value set and a speed evaluation value set. The performance predictor includes at least one of: a precision predictor and a speed predictor.

According to embodiments of the present disclosure, the third acquisition module may include a second acquisition sub-module and a third acquisition sub-module. The third acquisition module may include a fourth acquisition sub-module and a fifth acquisition sub-module. The third acquisition module may include the second acquisition sub-module, the third acquisition sub-module, the fourth acquisition sub-module and the fifth acquisition sub-module.

The second acquisition sub-module is used to process an evaluation set with the evaluation model structure set, so as to acquire a precision evaluation value set corresponding to the evaluation model structure set.

The third acquisition sub-module is used to acquire the precision predictor by using the evaluation model structure set and the precision evaluation value set corresponding to the evaluation model structure set.

The fourth acquisition sub-module is used to run, for each of the plurality of chips, the evaluation model structure set on the chip, so as to acquire a speed evaluation value set of the chip running the evaluation model structure set.

The fifth acquisition sub-module is used to acquire the speed predictor by using the evaluation model structure set and the speed evaluation value set of each chip running the evaluation model structure set.

According to embodiments of the present disclosure, the above-mentioned apparatus 500 of generating the pre-training model may further include a fifth determination module.

The fifth determination module is used to determine an evaluation model code set corresponding to the evaluation model structure set.

According to embodiments of the present disclosure, the third acquisition sub-module may include a first acquisition unit.

The first acquisition unit is used to acquire the precision predictor by using the evaluation model code set corresponding to the evaluation model structure set and the precision evaluation value set corresponding to the evaluation model structure set.

According to embodiments of the present disclosure, the fifth acquisition sub-module may include a second acquisition unit.

The second acquisition unit is used to acquire the speed predictor by using the evaluation model code set corresponding to the evaluation model structure set and the speed evaluation value set of each chip running the evaluation model structure set.

According to embodiments of the present disclosure, the fourth determination module may include a first determination sub-module and a second determination sub-module.

The first determination sub-module is used to determine an information entropy corresponding to each of the plurality of model structures included in the search space.

The second determination sub-module is used to determine the evaluation model structure set from the search space according to the information entropy corresponding to each of the plurality of model structures included in the search space.

According to embodiments of the present disclosure, the fourth module may include a third determination sub-module and a fourth determination sub-module.

The third determination sub-module is used to determine at least one cluster center corresponding to the search space according to the plurality of model structures included in the search space.

The fourth confirmation sub-module is used to acquire the evaluation model structure set according to the at least one cluster center corresponding to the search space.

According to embodiments of the present disclosure, the precision evaluation value set includes a precision evaluation value set corresponding to each of the plurality of chips, and the precision evaluation value set corresponding to each chip includes a plurality of prediction precision values. The speed evaluation value set includes a speed evaluation value set corresponding to each of the plurality of chips, and the speed evaluation value set corresponding to each of the plurality of chips includes a plurality of running speed values.

According to embodiments of the present disclosure, the second determination module 520 may include a sixth acquisition sub-module, a seventh acquisition sub-module and a fifth determination sub-module.

The sixth acquisition sub-module is used to rank, for each of the plurality of chips, the plurality of prediction precision values included in the precision evaluation value set corresponding to the chip, so as to acquire a ranking result corresponding to the precision evaluation value set of the chip.

The seventh acquisition sub-module is used to rank the plurality of running speed values included in the speed evaluation value set corresponding to the chip, so as acquire a ranking result corresponding to the speed evaluation value set of the chip.

The fifth determination sub-module is used to determine the target model structure corresponding to the chip according to the ranking result corresponding to the precision evaluation value set of the chip and the ranking result corresponding to the speed evaluation value set of the chip.

According to embodiments of the present disclosure, the precision evaluation value set includes a precision evaluation value set corresponding to each of the plurality of chips. The speed evaluation value set includes a speed evaluation value set corresponding to each of the plurality of chips.

According to embodiments of the present disclosure, the second determination module 520 may include a search sub-module, a sixth acquisition sub-module and a sixth determination sub-module.

The search sub-module is used to search for, for each of the plurality of chips, at least one candidate model structure corresponding to each of at least one predetermined running speed value from the speed evaluation value set corresponding to the chip.

The sixth acquisition sub-module is used to rank, for each of the at least one predetermined running speed value, the at least one candidate model structure corresponding to the predetermined running speed value according to the precision evaluation value set corresponding to the chip, so as to acquire a ranking result of the at least one candidate model structure corresponding to the predetermined running speed value.

The sixth determination sub-module is used to determine the target model structure corresponding to the chip from the at least one candidate model structure corresponding to the predetermined running speed value according to the ranking result of the at least one candidate model structure corresponding to the predetermined running speed value.

In the technical solution of the present disclosure, the collection, storage, use, processing, transmission, provision, disclosure, and application of the user's personal information involved are all in compliance with relevant laws and regulations, take essential confidentiality measures, and do not violate public order and good customs. In the technical solution of the present disclosure, authorization or consent is obtained from the user before the user's personal information is obtained or collected.

According to embodiments of the present disclosure, the present disclosure also provides an electronic device, a readable storage medium and a computer program product.

According to embodiments of the present disclosure, an electronic device is provided, including: at least one processor; and a memory communicatively connected to the at least one processor. The memory stores instructions executable by the at least one processor, and the instructions, when executed by the at least one processor, cause the at least one processor to perform the method as described above.

According to embodiments of the present disclosure, a non-transitory computer-readable storage medium having computer instructions therein is provided, and the computer instructions are configured to cause the computer to perform the method as described above.

According to embodiments of the present disclosure, a computer program product including a computer program is provided, and the computer program, when executed by a processor, implements the method as described above.

FIG. 6 schematically shows a block diagram of an electronic device adapted to implement a method of generating a pre-training model according to embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device 600 includes a computing unit 601 which may perform various appropriate actions and processes according to a computer program stored in a read only memory (ROM) 602 or a computer program loaded from a storage unit 608 into a random access memory (RAM) 603. In the RAM 603, various programs and data necessary for an operation of the electronic device 600 may also be stored. The computing unit 601, the ROM 602 and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, or a mouse; an output unit 607, such as displays or speakers of various types; a storage unit 608, such as a disk, or an optical disc; and a communication unit 609, such as a network card, a modem, or a wireless communication transceiver. The communication unit 609 allows the electronic device 600 to exchange information/data with other devices through a computer network such as Internet and/or various telecommunication networks.

The computing unit 601 may be various general-purpose and/or dedicated processing assemblies having processing and computing capabilities. Some examples of the computing units 601 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 601 executes various methods and steps described above, such as the method of generating the pre-training model. For example, in some embodiments, the method of generating the pre-training model may be implemented as a computer software program which is tangibly embodied in a machine-readable medium, such as the storage unit 608. In some embodiments, the computer program may be partially or entirely loaded and/or installed in the electronic device 600 via the ROM 602 and/or the communication unit 609. The computer program, when loaded in the RAM 603 and executed by the computing unit 601, may execute one or more steps in the method of generating the pre-training model described above. Alternatively, in other embodiments, the computing unit 601 may be configured to perform the method of generating the pre-training model by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of generating a pre-training model (310), comprising:
determining (S210) a performance index set (308) corresponding to a candidate model structure set (307,404), wherein the candidate model structure set (307,404) is determined from a plurality of model structures comprised in a search space (301), and the search space (301) is a super-network-based search space;
determining (S220), from the candidate model structure set (307,404), a target model structure (309) corresponding to each of a plurality of chips (4050-4052) according to the performance index set (308), wherein each target model structure (309) is a model structure meeting a performance index condition; and
determining (S230), for each of the plurality of chips (4050-4052), the target model structure (309) corresponding to the chip (4050-4052) as a pre-training model (310) corresponding to the chip (4050-4052), wherein the chip (4050-4052) is configured to run the pre-training model (310) corresponding to the chip (4050-4052).

2. The method (200) according to claim 1, further comprising:
training a super-network by using a training set, so as to acquire a trained super-network; and
acquiring the search space (301) based on the trained super-network.

3. The method (200) according to claim 1 or 2, wherein the determining (S210) a performance index set (308) corresponding to a candidate model structure set (307,404) comprises:
processing the candidate model structure set (307,404) by using a performance predictor (306), so as to acquire the performance index set (308) corresponding to the candidate model structure set (307,404).

4. The method (200) according to claim 3, further comprising:
determining an evaluation model structure set (302) from the search space (301); and
acquiring the performance predictor (306) by using the evaluation model structure set (302).

5. The method (200) according to claim 4, wherein the performance index set (308) comprises at least one of: a precision evaluation value set and a speed evaluation value set; and
the performance predictor (306) comprises at least one of: a precision predictor and a speed predictor;
wherein the acquiring the performance predictor (306) by using the evaluation model structure set (302) comprises at least one of:
processing an evaluation set (303) by using the evaluation model structure set (302), so as to acquire a precision evaluation value set corresponding to the evaluation model structure set (302); and
acquiring the precision predictor by using the evaluation model structure set (302) and the precision evaluation value set corresponding to the evaluation model structure set (302);
running, for each of the plurality of chips (4050-4052), the evaluation model structure set (302) on the chip (4050-4052), so as to acquire a speed evaluation value set of the chip (4050-4052) running the evaluation model structure set (302); and
acquiring the speed predictor by using the evaluation model structure set (302) and the speed evaluation value set of each chip (4050-4052) running the evaluation model structure set (302).

6. The method (200) according to claim 5, further comprising:
determining an evaluation model code set corresponding to the evaluation model structure set (302);
wherein the acquiring the precision predictor by using the evaluation model structure set (302) and the precision evaluation value set corresponding to the evaluation model structure set (302) comprises:
acquiring the precision predictor by using the evaluation model code set corresponding to the evaluation model structure set (302) and the precision evaluation value set corresponding to the evaluation model structure set (302);
wherein the acquiring the speed predictor by using the evaluation model structure set (302) and the speed evaluation value set of each chip (4050-4052) running the evaluation model structure set (302) comprises:
acquiring the speed predictor by using the evaluation model code set corresponding to the evaluation model structure set (302) and the speed evaluation value set of each chip (4050-4052) running the evaluation model structure set (302).

7. The method (200) according to any one of claims 4 to 6, wherein the determining an evaluation model structure set (302) from the search space (301) comprises:
determining an information entropy corresponding to each of the plurality of model structures comprised in the search space (301); and
determining the evaluation model structure set (302) from the search space (301) according to the information entropy corresponding to each of the plurality of model structures comprised in the search space (301).

8. The method (200) according to any one of claims 4 to 6, wherein the determining an evaluation model structure set (302) from the search space (301) comprises:
determining at least one cluster center corresponding to the search space (301) according to the plurality of model structures comprised in the search space (301); and
acquiring the evaluation model structure set (302) according to the at least one cluster center corresponding to the search space (301).

9. The method (200) according to claim 5 or 6, wherein the precision evaluation value set comprises a precision evaluation value set corresponding to each of the plurality of chips (4050-4052), and the precision evaluation value set corresponding to each of the plurality of chips (4050-4052) comprises a plurality of prediction precision values; and
the speed evaluation value set comprises a speed evaluation value set corresponding to each of the plurality of chips (4050-4052), and the speed evaluation value set corresponding to each of the plurality of chips (4050-4052) comprises a plurality of running speed values;
wherein the determining (S220), from the candidate model structure set (307,404), a target model structure (309) corresponding to each of a plurality of chips (4050-4052) according to the performance index set (308) comprises:
ranking, for each of the plurality of chips (4050-4052), the plurality of prediction precision values comprised in the precision evaluation value set corresponding to the chip (4050-4052), so as to acquire a ranking result corresponding to the precision evaluation value set of the chip (4050-4052);
ranking the plurality of running speed values comprised in the speed evaluation value set corresponding to the chip (4050-4052), so as to acquire a ranking result corresponding to the speed evaluation value set of the chip (4050-4052); and
determining the target model structure (309) corresponding to the chip (4050-4052) according to the ranking result corresponding to the precision evaluation value set of the chip (4050-4052) and the ranking result corresponding to the speed evaluation value set of the chip (4050-4052).

10. The method (200) according to claim 5 or 6, wherein the precision evaluation value set comprises a precision evaluation value set corresponding to each of the plurality of chips (4050-4052); and
the speed evaluation value set comprises a speed evaluation value set corresponding to each of the plurality of chips (4050-4052);
wherein the determining the target model structure (309) corresponding to the chip (4050-4052) according to the ranking result corresponding to the precision evaluation value set of the chip (4050-4052) and the ranking result corresponding to the speed evaluation value set of the chip (4050-4052) comprises:
searching for, for each of the plurality of chips (4050-4052), at least one candidate model structure corresponding to each of at least one predetermined running speed value from the speed evaluation value set corresponding to the chip (4050-4052);
ranking, for each of the at least one predetermined running speed value, the at least one candidate model structure corresponding to the predetermined running speed value according to the precision evaluation value set corresponding to the chip (4050-4052), so as to acquire a ranking result of the at least one candidate model structure corresponding to the predetermined running speed value; and
determining the target model structure (309) corresponding to the chip (4050-4052) from the at least one candidate model structure corresponding to the predetermined running speed value according to the ranking result of the at least one candidate model structure corresponding to the predetermined running speed value.

11. An apparatus (500) of generating a pre-training model, comprising:
a first determination module (510) configured to determine a performance index set corresponding to a candidate model structure set, wherein the candidate model structure set is determined from a plurality of model structures comprised in a search space, and the search space is a super-network-based search space;
a second determination module (520) configured to determine, from the candidate model structure set, a target model structure corresponding to each of a plurality of chips according to the performance index set, wherein each target model structure is a model structure meeting a performance index condition; and
a third determination module (530) configured to determine, for each of the plurality of chips, the target model structure corresponding to the chip as a pre-training model corresponding to the chip, wherein the chip configured to run the pre-training model corresponding to the chip.

12. The apparatus (500) according to claim 11, further comprising:
a first acquisition module configured to train a super-network by using a training set, so as to acquire a trained super-network; and
a second acquisition module configured to acquire the search space based on the trained super-network,
preferably, the first determination module (510) comprises:
a first acquisition sub-module configured to process the candidate model structure set by using a performance predictor, so as to acquire the performance index set corresponding to the candidate model structure set,
preferably, the apparatus (500) further comprises:
a fourth determination module configured to determine an evaluation model structure set from the search space; and
a third acquisition module configured to acquire the performance predictor by using the evaluation model structure set,
preferably, the performance index set comprises at least one of: a precision evaluation value set and a speed evaluation value set; and
the performance predictor comprises at least one of: a precision predictor and a speed predictor;
wherein the third acquisition module comprises at least one of:
a second acquisition sub-module configured to process an evaluation set with the evaluation model structure set, so as to acquire a precision evaluation value set corresponding to the evaluation model structure set; and
a third acquisition sub-module configured to acquire the precision predictor by using the evaluation model structure set and the precision evaluation value set corresponding to the evaluation model structure set;
a fourth acquisition sub-module configured to run, for each of the plurality of chips, the evaluation model structure set on the chip, so as to acquire a speed evaluation value set of the chip running the evaluation model structure set; and
a fifth acquisition sub-module configured to acquire the speed predictor by using the evaluation model structure set and the speed evaluation value set of each chip running the evaluation model structure set,
preferably, the apparatus (500) further comprises:
a fifth determination module configured to determine an evaluation model code set corresponding to the evaluation model structure set;
wherein the third acquisition sub-module comprises:
a first acquisition unit configured to acquire the precision predictor by using the evaluation model code set corresponding to the evaluation model structure set and the precision evaluation value set corresponding to the evaluation model structure set;
wherein the fifth acquisition sub-module comprises:
a second acquisition unit configured to acquire the speed predictor by using the evaluation model code set corresponding to the evaluation model structure set and the speed evaluation value set of each chip running the evaluation model structure set,
preferably, the fourth determination module comprises:
a first determination sub-module configured to determine an information entropy corresponding to each of the plurality of model structures comprised in the search space; and
a second determination sub-module configured to determine the evaluation model structure set from the search space according to the information entropy corresponding to each of the plurality of model structures comprised in the search space,
preferably, the fourth module comprises:
a third determination sub-module configured to determine at least one cluster center corresponding to the search space according to the plurality of model structures comprised in the search space; and
a fourth determination sub-module configured to acquire the evaluation model structure set according to the at least one cluster center corresponding to the search space,
preferably, the precision evaluation value set comprises a precision evaluation value set corresponding to each of the plurality of chips, and the precision evaluation value set corresponding to each of the plurality of chips comprises a plurality of prediction precision values; and
the speed evaluation value set comprises a speed evaluation value set corresponding to each of the plurality of chips, and the speed evaluation value set corresponding to each of the plurality of chips comprises a plurality of running speed values;
wherein the second determination module (520) comprises:
a sixth acquisition sub-module configured to rank, for each of the plurality of chips, the plurality of prediction precision values comprised in the precision evaluation value set corresponding to the chip, so as to acquire a ranking result corresponding to the precision evaluation value set of the chip;
a seventh acquisition sub-module configured to rank the plurality of running speed values comprised in the speed evaluation value set corresponding to the chip, so as acquire a ranking result corresponding to the speed evaluation value set of the chip; and
a fifth determination sub-module configured to determine the target model structure corresponding to the chip according to the ranking result corresponding to the precision evaluation value set of the chip and the ranking result corresponding to the speed evaluation value set of the chip,
preferably, the precision evaluation value set comprises a precision evaluation value set corresponding to each of the plurality of chips; and
the speed evaluation value set comprises a speed evaluation value set corresponding to each of the plurality of chips;
wherein the second determination module (520) comprises:
a search sub-module configured to search for, for each of the plurality of chips, at least one candidate model structure corresponding to each of at least one predetermined running speed value from the speed evaluation value set corresponding to the chip;
a sixth acquisition sub-module configured to rank, for each of the at least one predetermined running speed value, the at least one candidate model structure corresponding to the predetermined running speed value according to the precision evaluation value set corresponding to the chip, so as to acquire a ranking result of the at least one candidate model structure corresponding to the predetermined running speed value; and
a sixth determination sub-module configured to determine the target model structure corresponding to the chip from the at least one candidate model structure corresponding to the predetermined running speed value according to the ranking result of the at least one candidate model structure corresponding to the predetermined running speed value.

13. An electronic device (600), comprising:
at least one processor; and
a memory communicatively connected to the at least one processor; wherein
the memory stores instructions executable by the at least one processor, and the instructions, when executed by the at least one processor, cause the at least one processor to perform the method according to any one of claims 1 to 10.

14. A non-transitory computer-readable storage medium having computer instructions therein, wherein the computer instructions are configured to cause the computer to perform the method according to any one of claims 1 to 10.

15. A computer program product comprising a computer program, wherein the computer program, when executed by a processor, causes the processor to implement the method according to any one of claims 1 to 10.
